# EUROPÄISCHE PATENTANMELDUNG

(11) **EP 4 322 397 A1**
(43) Veröffentlichungstag der Anmeldung: **14.02.2024**
(21) Anmeldenummer: 23190221.4
(22) Anmeldetag: 08.08.2023
(51) Int. Cl.: H02S 20/30, H02S 30/10

(54) **VERFAHREN ZUM BETRIEB EINER PHOTOVOLTAIKANLAGE AUF LANDWIRTSCHAFTLICH GENUTZTEN FREIFLÄCHEN UND DARAUF BETRIEBENE PHOTOVOLTAIKANLAGE**

(30) Priorität: 08.08.2022 DE 102022119930
(71) Anmelder: PT Bröring GmbH & Co. KG, 49696 Molbergen (DE)
(72) Erfinder: Bröring, Michael, 49696 Molbergen (DE); Bröring, Wilfried, 49696 Molbergen (DE)
(74) Vertreter: Jabbusch, Matthias

(57) **Zusammenfassung**

Die Erfindung betrifft ein Verfahren zum Betrieb einer Photovoltaikanlage auf landwirtschaftlich genutzten Freiflächen und eine darauf betriebene Photovoltaikanlage. Die Photovoltaikanlage weist zwei Gruppen mit jeweils mehreren Solareinheiten auf. Jede Solareinheit weist ein Traggestell und mehrere auf dem Traggestell getragene Photovoltaikmodule auf. Die Solareinheiten der beiden Gruppen werden zeitlich versetzt zueinander bewegt, so dass die Solareinheiten der beiden Gruppen in einem zweiten Zeitraum, insbesondere im Winter, auf separaten Feldern angeordnet werden und im Sommer gemeinsam auf einem Feld angeordnet werden können, wobei jede Solareinheit jeweils benachbart zu wenigstens einer Solareinheit der jeweils anderen Gruppe auf dem Feld angeordnet wird. Damit wird verfahrensgemäß eine Mehrfelderwirtschaft betrieben, die eine an den jahreszeitlichen Sonnenstand angepasste Nutzung der Freifläche für den Betrieb der Photovoltaikanlage ermöglicht.

## Beschreibung

Die Erfindung betrifft ein Verfahren zum Betrieb einer Photovoltaikanlage, die eine Vielzahl von Photovoltaikmodulen aufweist, auf landwirtschaftlich genutzten Freiflächen nach dem Oberbegriff des Patentanspruchs 1. Außerdem betrifft die Erfindung eine Photovoltaikanlage, die eine Vielzahl von Photovoltaikmodulen aufweist und auf landwirtschaftlich genutzten Freiflächen betrieben wird.

Photovoltaikanlagen werden zunehmend nicht nur auf Gebäuden, sondern auch auf Freiflächen angeordnet. Dabei konkurriert die Nutzung der Freiflächen als Standort für Photovoltaikanlagen mit der landwirtschaftlichen Nutzung dieser Freiflächen. Eine doppelte Nutzung ist nur eingeschränkt möglich, wenn Photovoltaikmodule der Photovoltaikanlagen in geringer Höhe auf ortsfest montierten Traggestellen angeordnet sind. Beispielsweise kann in diesem Fall Gras auf der Freifläche wachsen, das gemäht oder von dort weidenden Schafen gefressen werden kann.

Es ist daher ebenfalls bekannt, die Photovoltaikmodule in größerer Höhe auf Traggestellen anzuordnen, so dass landwirtschaftliche Fahrzeuge für die Bodenbearbeitung, Einsaat und Ernte darunter hindurchfahren können. Die Einrichtung von Konstruktionen mit derartigen Traggestellen ist jedoch aufwendig und teuer. Außerdem behindern und beschränken unvermeidbare Stützen derartiger Traggestelle weiterhin den Einsatz von landwirtschaftlichen Fahrzeugen.

Aus DE 20 2020 104 859 U1 ist ein System zur Kombination landwirtschaftlicher Aktivitäten mit der Erzeugung von Solarenergie bekannt, bei welchem Solarmodule auf Schienen beweglich über einer landwirtschaftlich genutzten Fläche angeordnet werden. Beispielsweise zur Ernte darauf angebauter Produkte können die Solarmodule zur Seite geschoben werden und können dann landwirtschaftliche Fahrzeuge zwischen den Schienen fahren.

Der Erfindung liegt die Aufgabe zugrunde, die kombinierte Nutzung von Freiflächen für die Landwirtschaft und für den Betrieb von Photovoltaikanlagen zu optimieren und hierfür ein Verfahren und eine Photovoltaikanlage bereitzustellen.

Die Erfindung löst diese Aufgabe mit einem Verfahren nach dem Patentanspruch 1 und mit einer Photovoltaikanlage nach dem Patentanspruch 12. Vorteilhafte Ausführungsformen der Erfindung sind in den Unteransprüchen angegeben.

Bei einem Verfahren zum Betrieb einer Photovoltaikanlage, die eine Vielzahl von Photovoltaikmodulen aufweist, auf landwirtschaftlich genutzten Freiflächen ist erfindungswesentlich vorgesehen, dass eine Mehrfelderwirtschaft betrieben wird mit mehreren Solareinheiten, die jeweils ein Traggestell und mehrere auf dem Traggestell getragene Photovoltaikmodule aufweist und die jeweils in einer gemeinsamen Zugrichtung der Solareinheiten über den Untergrund gezogen werden können, bei der innerhalb eines ersten Zeitraums, insbesondere jeweils im Herbst, die Solareinheiten einer jeweils vorausziehenden Gruppe von einem Feld in ihrer Zugrichtung auf ein anderes Feld vorausgezogen werden, so dass über einen darauf folgenden zweiten Zeitraum, insbesondere über den darauf folgenden Winter, die Solareinheiten dieser vorausziehenden Gruppe separat von den Solareinheiten einer jeweils nachziehenden Gruppe auf dem anderen Feld angeordnet werden, und bei der innerhalb eines darauf folgenden dritten Zeitraums, insbesondere im darauf folgenden Frühling, nur die Solareinheiten der jeweils nachziehenden Gruppe in ihrer Zugrichtung auf das andere Feld mit den Solareinheiten der jeweils vorausziehenden Gruppe nachgezogen werden, so dass über einen darauf folgenden vierten Zeitraum, insbesondere über den darauf folgenden Sommer, alle Solareinheiten gemeinsam in zueinander paralleler Ausrichtung und dabei jeweils benachbart zu wenigstens einer Solareinheit der jeweils anderen Gruppe auf dem anderen Feld angeordnet werden.

Die Erfindung berücksichtigt den im Jahresverlauf unterschiedlichen Sonnenstand, der im Sommer eine dichterstehende Anordnung von Photovoltaikmodulen als im Winter erlaubt, wenn die Photovoltaikmodule zwar über den Sommer wie über den Winter möglichst dichtstehend angeordnet werden sollen, sich dabei aber auch im Winter bei niedrigem Sonnenstand nicht gegenseitig beschatten sollen. Über den zweiten Zeitraum, also insbesondere im Winter, sind die Traggestelle mit den Photovoltaikmodulen daher in größerem Abstand zueinander auf zwei separaten Feldern angeordnet, als die Traggestelle über den vierten Zeitraum, also im Sommer, alle gemeinsam auf einem Feld angeordnet sind.

Unter den Feldern sind Bereiche auf der Freifläche zu verstehen, auf denen in irgendwelchen vierten Zeiträumen, also insbesondere Sommern, im erfindungsgemäßen Verfahren alle Solareinheiten gemeinsam angeordnet sind. Eine physische Abgrenzung zwischen den Feldern ist nicht notwendig und vorzugsweise nicht vorgesehen, um das Ziehen der Solareinheiten zu erleichtern. Wenn jedoch bei einer alternativen Ausführungsform eine physische Abgrenzung zwischen den Feldern vorhanden ist, so ist diese vorzugsweise demontierbar ausgebildet, beispielsweise in Form eines zwischen den Feldern angeordneten Zaunes, der vor dem Ziehen auf das andere Feld demontiert und im Anschluss wieder aufgestellt wird.

Durch die Anordnung aller Traggestelle mit den Photovoltaikmodulen im Sommer auf einem einzigen Feld sind alle weiteren für die Mehrfelderwirtschaft genutzten Felder nach Herstellung dieser Anordnung im dritten Zeitraum, also insbesondere im Frühling, und bis zur Änderung dieser Anordnung im ersten Zeitraum, also insbesondere im Herbst, frei von Traggestellen und können auf herkömmliche Weise mit allen herkömmlichen landwirtschaftlichen Fahrzeugen befahren werden.

Im vierten Zeitraum, also insbesondere im Sommer, liegt lediglich jeweils ein Feld brach und kann sich regenerieren. Das brachliegende Feld liegt vorzugsweise auch im vorherigen zweiten Zeitraum, insbesondere Winter, schon brach und im nachfolgenden zweiten Zeitraum, insbesondere Winter, noch brach, so dass vorzugsweise eine Zeit von etwa eineinhalb Jahren zur Regeneration gegeben ist. Auf dem brachliegenden Feld wächst hierbei vorzugsweise Gras oder eine Zwischenfrucht, welche bei der Regeneration des Bodens hilft. Die Erholung des Bodens wird gefördert und Erosion wird entgegengewirkt. Oder es wird auf dem brachliegenden Feld eine Blühwiese angelegt oder eine insektenfreundliche Samenmischung eingesät, um die Biodiversität zu erhöhen.

Die Solareinheiten können auf einfache Weise über den Boden von einem Feld auf das jeweils andere Feld gezogen werden. Hierfür ist keine auf den Feldern installierte Bodenkonstruktion notwendig, welche die Bearbeitung der jeweils freien Felder beeinträchtigen könnte.

Die Solareinheiten werden insbesondere über jeden vierten Zeitraum auf einem anderen Feld als über den jeweils vorherigen vierten Zeitraum angeordnet. Ein Feld liegt somit nicht zwei Sommer in Folge brach, sondern kann vor dem Sommer, der auf einen für die Anordnung der Photovoltaikmodule auf dem jeweiligen Feld genutzten Sommer folgt, wieder für den Anbau von Nutzpflanzen genutzt werden.

Bei besonders vorteilhaften Ausführungsformen des erfindungsgemäßen Verfahrens bleiben die jeweiligen Solareinheiten immer derselben Gruppe, also entweder der vorausziehenden Gruppe oder der nachziehenden Gruppe, zugeordnet. Bei anderen Ausführungsformen des Verfahrens wechselt die Gruppenzugehörigkeit und wird insbesondere vertauscht, bevor die Solareinheiten der vorausziehenden Gruppe innerhalb des ersten Zeitraums, also insbesondere im Herbst, auf ein anderes Feld gezogen werden sollen.

Die Solareinheiten der vorausziehenden Gruppe werden vorzugsweise innerhalb des dritten Zeitraums nicht bewegt, bleiben also insbesondere über den Sommer auf dem Feld stehen, auf dem sie auch schon im vorausgegangenen Winter gestanden haben. Die Solareinheiten der nachziehenden Gruppe werden hingegen innerhalb des dritten Zeitraums nachgezogen. Vorzugsweise werden die Solareinheiten der nachziehenden Gruppe innerhalb des dritten Zeitraums von einem zum jeweiligen Feld unmittelbar benachbarten Feld nachgezogen werden. Die Solareinheiten der beiden Gruppen sind hierbei also über den zweiten Zeitraum auf einander unmittelbar benachbarten Feldern angeordnet. Das hat den Vorteil, dass die Solareinheiten der nachziehenden Gruppe im Frühling nicht über ein im Herbst bestelltes und im folgenden Herbst abzuerntendes Feld gezogen werden müssen.

Vorteilhafterweise werden mindestens drei Felder bewirtschaftet. Denn nur dann kann über den zweiten Zeitraum, also insbesondere im Winter, mindestens ein Feld für den Ackerbau genutzt werden. Besonders bevorzugt ist die Mehrfelderwirtschaft eine Dreifelderwirtschaft, bei der genau drei Felder in Reihe nebeneinander angeordnet sind. Hierbei ist insbesondere vorgesehen, dass die Solareinheiten wiederholt jeweils innerhalb des ersten Zeitraums oder dritten Zeitraums vom ersten Feld auf das mittlere Feld, dann weiter auf das letzte Feld, dann zurück auf das mittlere Feld und dann weiter zurück auf das erste Feld gezogen werden. Die äußeren Felder können somit zwischen den jeweiligen Nutzungszeiträumen für die Traggestelle mit den Photovoltaikmodulen beispielsweise über einen Sommer für den Anbau von Sommergerste oder Mais, einen Winter und einen Sommer für den Anbau von Triticale und einen Winter und einen Sommer für den Anbau von Raps genutzt werden, bevor wieder die Traggestelle der ersten Gruppe auf das jeweilige Feld gezogen werden. Das mittlere Feld kann jeden zweiten Sommer beispielsweise für den Anbau von Sommergerste oder Mais genutzt werden.

Die Solareinheiten der vorausziehenden Gruppe werden hierbei innerhalb des ersten Zeitraums, also insbesondere im Herbst, auf ein jeweils unmittelbar benachbartes Feld vorausgezogen. Alternativ ist jedoch auch eine Dreifelderwirtschaft denkbar, bei der die Solareinheiten vom letzten Feld über das mittlere Feld direkt auf das erste Feld gezogen werden. Dabei wäre jedoch zu beachten, dass das mittlere Feld dabei, also im ersten Zeitraum davor und im dritten Zeitraum danach, abgeerntet und noch nicht wieder bestellt sein sollte.

Als denkbare Alternative zur Dreifelderwirtschaft ist die Mehrfelderwirtschaft eine Vierfelderwirtschaft, bei der vier Felder in Reihe nebeneinander angeordnet sind. Hierbei wird vorzugsweise jede Solareinheit innerhalb von vier Jahren über jeweils einen zweiten Zeitraum und über jeweils einen vierten Zeitraum auf jedem Feld angeordnet.

Bei einer speziellen Weiterbildung ist hierbei vorgesehen, dass die Solareinheiten aus beiden Gruppen im Wechsel über zwei aufeinander folgende zweite Zeiträume nur auf den ersten beiden Feldern und darauf folgend über zwei aufeinander folgende Winter nur auf den letzten beiden Feldern angeordnet werden. Im ersten Zeitraum, also insbesondere im Herbst, werden also jedes zweite Mal, insbesondere jedes zweite Jahr, die Solareinheiten aus beiden Gruppen auf jeweils ein anderes Feld gezogen. Innerhalb von vier Jahren kann somit jedes Feld einmal für ein Sommergetreide und zweimal für den Herbstanbau für die Ernte im nächsten Sommer oder Herbst genutzt werden, ohne dass Solareinheiten über ein im Herbst bestelltes und für die Ernte im folgenden Frühjahr bestimmtes Feld gezogen werden müssten. Bevorzugt werden die Solareinheiten, insbesondere nacheinander, jeweils von einem Schlepper oder mittels einer Seilwinde in ihrer Zugrichtung auf das jeweils andere Feld gezogen. Die Seilwinde kann hierbei eigenständig sein oder auch am Schlepper angeordnet und vorzugsweise von diesem angetrieben sein. Hierfür weisen die Traggestelle der Solareinheiten vorzugsweise Haken oder Ösen oder auf andere Weise geeignet ausgebildete Teile des Traggestells auf, um daran wenigstens ein Seil oder wenigstens eine Kette zum Ziehen des Traggestells befestigen zu können.

Die Erfindung kommt ohne Fundamente für die Traggestelle aus. Bevorzugt ist daher vorgesehen, dass zumindest Teile einer Rohrkonstruktion des Traggestells zur Ballastierung der Solareinheit mit einer Flüssigkeit, insbesondere mit Wasser oder mit einem Kältemittel oder mit einer Frostschutzflüssigkeit, befüllt werden. Dies erfolgt insbesondere nachdem die jeweilige Solareinheit auf das jeweils andere Feld gezogen wurde, damit die Solareinheit zuvor leichter auf das andere Feld gezogen werden kann. Bevor die jeweilige Solareinheit auf das jeweils andere Feld gezogen wird, wird entsprechend die Flüssigkeit aus der Rohrkonstruktion vorzugsweise vollständig oder teilweise abgelassen.

Die gezogenen Solareinheiten gleiten bei einer besonders bevorzugten Ausführungsform auf eigenen Gleitkufen, die in der Zugrichtung der Solareinheiten ausgerichtet sind, über die Felder. Die Gleitkufen sind dabei vorteilhafterweise Rohre der Rohrkonstruktion, die, nachdem die jeweilige Solareinheit auf das jeweils andere Feld gezogen wurde, zur Ballastierung der Solareinheit mit der Flüssigkeit befüllt werden. Bei weiteren Ausführungsformen ist es denkbar, dass die Traggestelle, insbesondere als Alternative zu den Gleitkufen, eigene Rollen oder Räder aufweisen, mittels denen sie über die Felder oder weniger bevorzugt über auf den Feldern angeordnete Schienen fahren können.

Bei einer vorteilhaften Ausführungsform des erfindungsgemäßen Verfahrens ist vorgesehen, dass, bevor die Solareinheiten der vorausziehenden Gruppe auf das andere Feld gezogen werden, dieses andere Feld abgeerntet wird. Hiernach und ebenfalls bevor die Solareinheiten der vorausziehenden Gruppe auf das andere Feld gezogen werden, wird vorzugsweise entweder Gras oder eine Untersaat in das andere Feld eingesät oder eine Zwischenfrucht auf dem anderen Feld angebaut oder das andere Feld landwirtschaftlich brach liegen gelassen.

Nachdem die Solareinheiten der nachziehenden Gruppe innerhalb des dritten Zeitraums vom jeweiligen Feld auf das jeweilige andere Feld mit den Solareinheiten der vorausziehenden Gruppe gezogen wurden, werden gemäß einer vorteilhaften Ausführungsform des erfindungsgemäßen Verfahrens Nutzpflanzen, bevorzugt ein Sommergetreide, beispielsweise Sommergerste oder Mais, auf dem von den Solareinheiten der nachziehenden Gruppe verlassenen Feld angebaut. Nachfolgend kann dann beispielsweise wieder für jeweils etwa ein Jahr Triticale und Raps angebaut werden, insbesondere wenn es sich um das erste oder letzte Feld in der Reihe von drei Feldern handelt, bevor wieder die Solareinheiten der dann jeweils vorausziehenden Gruppe auf das Feld gezogen werden.

Vorzugsweise werden die Solareinheiten mit ihrer Zugrichtung in etwa in Ostwestrichtung ausgerichtet mit den Photovoltaikmodulen quer zu ihrer Zugrichtung in etwa nach Süden geneigt auf den Feldern angeordnet. Somit ist bei der separaten Anordnung der Solareinheiten beider Gruppen über den zweiten Zeitraum, also insbesondere im Winter, der Abstand zwischen den Photovoltaikmodulen in etwa in Nordsüdrichtung vergrößert und die Gefahr einer Beschattung von Photovoltaikmodulen benachbarter Traggestelle entsprechend minimiert.

Die Erfindung löst die eingangs genannte Aufgabe auch mit einer Photovoltaikanlage, die eine Vielzahl von Photovoltaikmodulen aufweist und auf landwirtschaftlich genutzten Freiflächen, insbesondere mit einem Verfahren nach einem der vorherigen Ansprüche, betrieben wird, wobei die Photovoltaikanlage mehrere parallel zueinander ausgerichtete Solareinheiten, die jeweils ein Traggestell und mehrere auf dem Traggestell getragene Photovoltaikmodule aufweisen und die jeweils in einer gemeinsamen Zugrichtung der Solareinheiten über den Untergrund gezogen werden können, aufweist, wobei über einen Zeitraum die Solareinheiten einer jeweils vorausziehenden Gruppe auf einem anderen Feld als die Solareinheiten einer jeweils nachziehenden Gruppe und quer zur Zugrichtung der Solareinheiten derart versetzt zu den Solareinheiten der nachziehenden Gruppe angeordnet sind, dass, wenn die Solareinheiten der nachziehenden Gruppe in ihrer Zugrichtung auf das andere Feld mit den Solareinheiten der vorausziehenden Gruppe nachgezogen werden, alle Solareinheiten gemeinsam in zueinander paralleler Ausrichtung und dabei jeweils benachbart zu wenigstens einer Solareinheit der jeweils anderen Gruppe auf dem anderen Feld angeordnet werden.

Vorteilhafterweise weist jede Solareinheit eine längliche Form in seiner Zugrichtung auf. Insbesondere reicht die Solareinheit über das gesamte Feld. Alternativ können auch mehrere einzelne oder miteinander verbundene oder verbindbare Solareinheiten derselben Gruppe hintereinander auf dem Feld angeordnet werden, wobei diese Solareinheiten eventuell auch keine längliche Form aufweisen.

Die Photovoltaikanlage weist zusätzlich zu den mehreren, insbesondere baugleichen, Solareinheiten mit den Photovoltaikmodulen wenigstens eine zentrale Steuereinheit auf, mit der mehrere oder alle Photovoltaikmodule elektrisch, insbesondere über wenigstens ein Kabel, verbunden sind und über welches Strom beispielsweise in das öffentliche Stromnetz eingespeist werden kann oder Verbraucher gespeist werden können. Die Steuereinheit ist vorzugsweise mit wenigstens einem Stromzähler für die Abrechnung eingespeisten Stroms ausgestattet.

Bei einer vorteilhaften Ausführungsform der Photovoltaikanlage weist das Traggestell eine Rohrkonstruktion auf, die zur Ballastierung der Solareinheit zumindest teilweise mit einer anderen Flüssigkeit, insbesondere mit Wasser oder mit einem Kältemittel oder mit einer Frostschutzflüssigkeit, befüllt werden kann. Weiter weist das Traggestell vorzugsweise eigene Gleitkufen auf, die in Zugrichtung der Solareinheit ausgerichtet sind und auf denen die Solareinheit über die Felder gleiten kann. Die Gleitkufen sind bevorzugt Rohre der Rohrkonstruktion, die zur Ballastierung der Solareinheit zumindest teilweise mit der Flüssigkeit befüllt werden können.

Vorteilhafterweise sind die Photovoltaikmodule quer zur Zugrichtung der Solareinheit geneigt auf dem Traggestell angeordnet sind. Bei entsprechender Ausrichtung der Solareinheit in Ostwestrichtung ergibt sich so eine vorteilhafte Neigung der Photovoltaikmodule zur Sonne.

Weitere vorteilhafte Ausführungsformen ergeben sich aus den Ansprüchen, aus den Figuren und aus der nachfolgenden Beschreibung eines in den Zeichnungen dargestellten besonders bevorzugten Ausführungsbeispiels der Erfindung. In den Zeichnungen zeigen:
- Figuren 1a bis 1d:: eine landwirtschaftlich genutzte Freifläche mit drei Feldern und zwei Gruppen mit jeweils sieben Solareinheiten zu verschiedenen Zeitpunkten, in denen die Solareinheiten einer Gruppe entweder gemäß den Figuren 1a und 1c auf ein jeweils anderes Feld gezogen werden oder gemäß den Figuren 1b und 1d über einen Zeitraum auf einem der Felder abgestellt sind, in vereinfachter schematischer Darstellung zur Veranschaulichung des erfindungsgemäßen Verfahrens;
- Figuren 2a bis 2f:: die landwirtschaftlich genutzte Freifläche mit den drei Feldern und den Solareinheiten von den Figuren 1a bis 1d in gegenüber der Darstellung gemäß den Figuren 1b und 1d weiteren Zeiträumen in vereinfachter schematischer Darstellung zur weiteren Veranschaulichung des erfindungsgemäßen Verfahrens;
- Figur 3:: eine Solareinheit für das in den Figuren 1 und 2 veranschaulichte Verfahren in vereinfachter Darstellung in einer Draufsicht; und
- Figur 4:: die Solareinheit von Figur 3 in einer Seitenansicht senkrecht zu ihrer Zugrichtung.

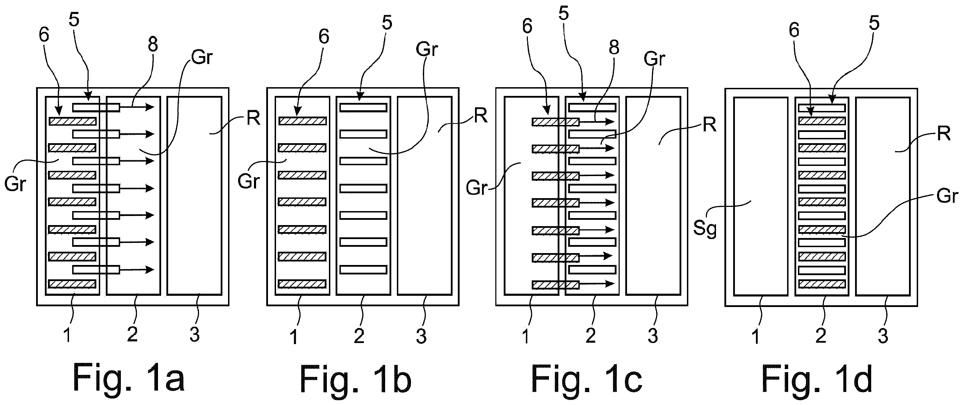

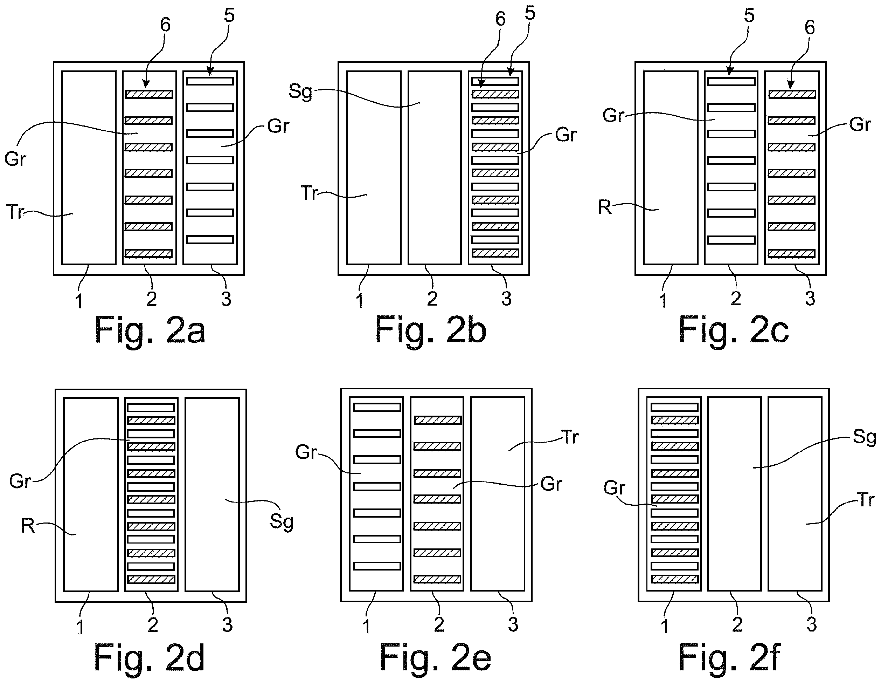

In den Figuren 1a bis 1d und 2a bis 2f ist jeweils dieselbe landwirtschaftlich genutzte Freifläche mit einem ersten Feld 1, einem mittleren Feld 2 und einem letzten Feld 3 dargestellt. Auf den Feldern 1, 2 und 3 werden in wechselnder Verteilung insbesondere Sommergerste Sg, Triticale Tr und Raps R angebaut sowie zur Regeneration Gras Gr gesäht oder das jeweilige Feld 1, 2, 3 brach liegen gelassen. Auf der Freifläche sind mehrere einer jeweils vorausziehenden Gruppe zugeordnete Solareinheiten 5 und mehrere einer jeweils nachziehenden Gruppe zugeordnete Solareinheiten 6 angeordnet, die gemeinsam zu einer auf der Freifläche betriebenen Photovoltaikanlage gehören. Auf dem ersten Feld 1 in Figur 2f, auf dem mittleren Feld 2 in den Figuren 1d und 2d und auf dem letzten Feld 3 in Figur 2b sind die Solareinheiten 5 und 6 der beiden Gruppen alternierend und gemeinsam angeordnet. Jede jeweils benachbarte Solareinheit 5 oder 6 gehört also der jeweils anderen Gruppe an.

Figur 1a veranschaulicht die Bewegung der Solareinheiten 5, die der vorausziehenden Gruppe angehören, vom ersten Feld 1 auf das zweite Feld 2 in einem ersten Zeitraum. Dieser erste Zeitraum liegt im Herbst nach einem Zeitraum, der den Sommer umfasst und in dem alle Solareinheiten 5 und 6 entsprechend Figur 2f zusammen mit Gras Gr auf dem ersten Feld 1 angeordnet waren, wobei zum Start des Verfahrens auf den Feldern 2 und 3 gegebenenfalls Wintergerste angeordnet war und im ersten Zeitraum geerntet wird. Dieser in Figur 1a dargestellte erste Zeitraum liegt außerdem vor einem in Figur 1b dargestellten zweiten Zeitraum, in dem die Solareinheiten 5 der vorausziehenden Gruppe zusammen mit Gras Gr auf dem mittleren Feld 2 und die Solareinheiten 6 der nachziehenden Gruppe weiterhin mit Gras Gr auf dem ersten Feld 1 angeordnet sind.

Vor der Bewegung der Solareinheiten 5 gemäß Figur 1 wird das mittlere Feld 2, insbesondere mit Wintergerste oder Sommergerste, abgeerntet und wird Gras Gr auf das mittlere Feld 2 gesäht. Auf dem ersten Feld 1 wächst weiterhin Gras Gr. Das letzte Feld 3, insbesondere mit Wintergerste Wg oder Triticale Tr, wird innerhalb des ersten Zeitraums abgeerntet und neu bestellt, wobei insbesondere Raps R gesäht wird. Ebenfalls vor der Bewegung der Solareinheiten 5 wird bevorzugt Wasser, das zur Ballastierung diente, von den Solareinheiten 5 abgelassen.

Die einzelnen Solareinheiten 5 werden innerhalb des ersten Zeitraums, bevorzugt jeweils einzeln nacheinander, über ein an der Solareinheit 5 hierfür befestigtes Zugmittel, etwa in Form eines Seils oder einer Kette, mittels einer Seilwinde oder mittels eines Schleppers vom ersten Feld 1 auf das mittlere Feld 2 gezogen und dabei gegenüber den Solareinheiten 6 der zweiten Gruppe, die auf dem ersten Feld 1 stehen bleiben, vorausgezogen. Die Zugrichtung der Solareinheiten 5 ist in Figur 1a mit Pfeilen veranschaulicht und mit dem Bezugszeichen 8 bezeichnet. Im Anschluss an das Ziehen der Solareinheiten 5 erfolgt vorzugsweise wieder eine Ballastierung der Solareinheiten 5 mittels Wasser über Wasseranschlüsse an den Solareinheiten 5, um die Standfestigkeit der Solareinheiten 5 zu erhöhen.

Figur 1b zeigt die Anordnung der Solareinheiten 5 und 6 über den zweiten Zeitraum, der insbesondere den Winter umfasst. Alle Solareinheiten 5 und 6 sind weiterhin in ihrer Querrichtung, also senkrecht zur Zugrichtung 8, idealerweise in etwa nach Süden ausgerichtet. Die Zugrichtung 8 ist also in etwa die Ostwestrichtung mit im Laufe des Verfahrens wechselnder Orientierung. Alle Solareinheiten 5 und 6 der beiden Gruppen sind in Figur 1b in ihrer Querrichtung jeweils mindestens um die Breite einer Solareinheit 5, 6 der jeweils anderen Gruppe voneinander beabstandet auf dem jeweiligen Feld 1 oder 2 angeordnet. Dadurch wird dem im Winter vergleichsweise niedrigen Sonnenstand Rechnung getragen und eine gegenseitige Beschattung der Solareinheiten 5 und 6 durch benachbarte Solareinheiten 5 und 6 vermieden.

Figur 1c veranschaulicht einen auf den zweiten Zeitraum gemäß Figur 1b folgenden dritten Zeitraum, der im Frühling vor einem in Figur 1d dargestellten und den Sommer umfassenden dritten Zeitraum liegt. Innerhalb dieses dritten Zeitraums, also im Frühling, werden die Solareinheiten 6 der nachziehenden Gruppe vom ersten Feld 1 in der Zugrichtung 8 auf das mittlere Feld 2 nachgezogen, auf dem weiterhin die Solareinheiten 5 der vorausziehenden Gruppe angeordnet sind und welches weiterhin mit Gras bewachsen ist. Eine zeitweilige Verringerung der Ballastierung der Solareinheiten 6 hierfür erfolgt gegebenenfalls analog zum vorstehend zu Figur 1a beschriebenen Ziehen der Solareinheiten 5, also insbesondere durch Ablassen von Wasser und erneutem Befüllen von Teilen des Traggestells der Solareinheiten 6 mit mit Wasser. Das erste Feld 1 wird nachfolgend mit Sommergerste Sg bestellt. Der Raps R bleibt bis zur Ernte im Spätsommer oder Herbst auf dem letzten Feld 3 stehen.

In den folgenden Jahren wiederholt sich jeweils das Vorausziehen der Solareinheiten 5 auf ein benachbartes Feld 1, 2, 3 im ersten Zeitraum, insbesondere Herbst, und das Nachziehen der Solareinheiten 6 im jeweils darauffolgenden dritten Zeitraum, insbesondere Frühling des Folgejahres. In jedem zweiten Zeitraum, insbesondere Winter, sind die Solareinheiten 5 und 6 der beiden Gruppen somit auf separaten Feldern 1, 2, 3 angeordnet, wohingegen alle Solareinheiten 5 und 6 in jedem vierten Zeitraum, insbesondere Sommer, gemeinsam auf einem der Felder 1, 2 oder 3 angeordnet sind. Dies ist in den Figuren 2a bis 2f veranschaulicht, die im zeitlichen Ablauf auf die Anordnungen gemäß den Figuren 1b und 1d folgen. Das Ziehen der Solareinheiten 5 oder 6 sowie das Bestellen der Felder 1, 2 und 3 dazwischen erfolgt analog der Beschreibung zu den Figuren 1a und 1c.

Im zweiten Zeitraum, insbesondere Winter, gemäß Figur 2a ist auf dem ersten Feld 1 der Raps R abgeerntet und Triticale Tr angebaut. Die Solareinheiten 5 befinden sich auf dem letzten Feld 3 und die Solareinheiten 6 auf dem mittleren Feld 2. Auf den Feldern 2, 3, auf denen sich jeweils die Solareinheiten 5, 6 befinden, wächst jeweils Gras Gr. Dies gilt auch für die Anordnungen gemäß den Figuren 2b bis 2f.

Im dritten Zeitraum, insbesondere Sommer, gemäß Figur 2b sind alle Solareinheiten 5 und 6 auf dem letzten Feld 3. Auf dem ersten Feld 1 steht weiterhin Triticale Tr. Das mittlere Feld 2 ist neu mit Sommergerste Sg bestellt.

Im darauf folgenden ersten Zeitraum, insbesondere Winter, gemäß Figur 2c sind die Solareinheiten 5 der vorausziehenden Gruppe auf das mittlere Feld 2 zurückbewegt, nachdem dort vorher die Sommergerste Sg geerntet und wieder Gras Gr gesäht wurde. Auf dem ersten Feld 1 wurde Raps R nach der Ernte der Triticale gesäht.

Im vierten Zeitraum gemäß Figur 2 d steht auf dem ersten Feld 1 weiterhin der Raps R. Auf dem von den auf das mittlere Feld 2 nachgezogenen Solareinheiten 6 geräumten letzten Feld 3 ist Sommergerste Sg angebaut.

Nach der Ernte des Rapses R auf dem ersten Feld 1 und der Ernte der Sommergerste Sg sowie Neueinsaht von Triticale Tr auf dem dritten Feld 3 im ersten Zeitraum ergibt sich über den darauf folgenden zweiten Zeitraum, insbesondere Winter, die Anordnung gemäß Figur 2e.

Im darauf folgenden dritten Zeitraum werden wieder die Solareinheiten 6 der nachziehenden Gruppe 6 auf das erste Feld 1 nachgezogen und wird Sommergerste auf dem mittleren Feld 2 gesäht, sodass sich im vierten Zeitraum, insbesondere Sommer, die Anordnung gemäß Figur 2f ergibt, welche wiederum Ausgangspunkt für das in Figur 1a veranschaulichte Vorausziehen der Solareinheiten 5 und die erneute Herstellung der Anordnung gemäß Figur 1b ist. Das beschriebene Verfahren kann somit über viele Jahre wiederholt durchgeführt werden. Der Boden kann dabei immer wieder durch den Anbau von Zwischenfrüchten, insektenfreundlicher Blühsaaten oder Gras regenerieren. Die Fläche über dem Gras wird dabei sinnvoll für die solare Energiegewinnung mittels der Solareinheiten 5 und 6 optimal mittels in unterschiedlichen Zeiträumen unterschiedlich dichter Aufstellung und damit insbesondere für eine optimale Energieausbeute ohne gegenseitige Beschattung der Photovoltaikmodule angepasst an den jahreszeitlichen Sonnenstand genutzt.

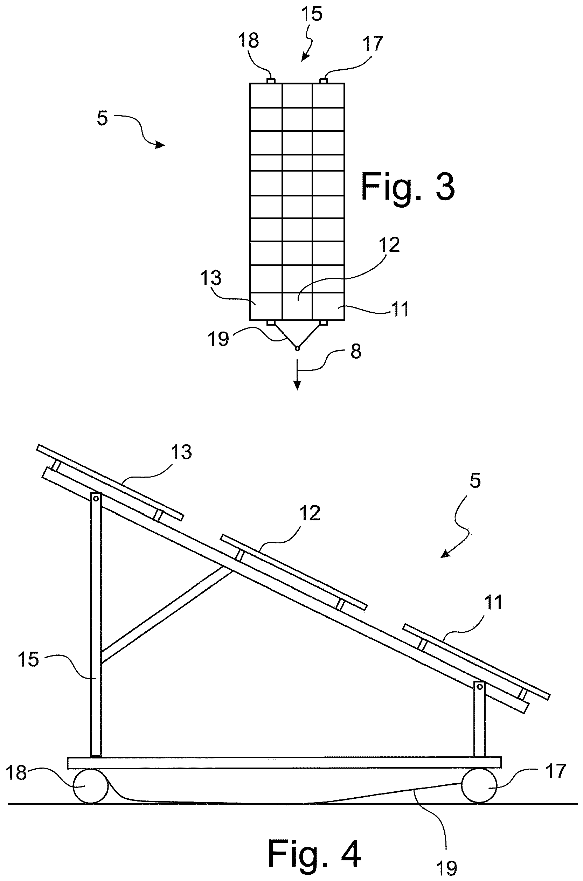

In den Figuren 3 und 4 ist eine zu den Solareinheiten 6 baugleiche Solareinheit 5 mit einer Vielzahl von in drei Reihen nebeneinander angeordneten Photovoltaikmodulen dargestellt, von denen beispielhaft ein Photovoltaikmodul 11 in der ersten Reihe, ein Photovoltaikmodul 12 in der zweiten Reihe und ein Photovoltaikmodul 13 in der dritten Reihe bezeichnet sind. Die Solareinheit 5 weist ein Traggestell 15 auf, welches die Photovoltaikmodule 11, 12, 13 trägt. Das Traggestell 15 ist zumindest teilweise als Rohrkonstruktion aus Rohren ausgebildet. Das Traggestell 15 weist zwei Gleitkufen 17 und 18 auf, die aus parallel zur Zugrichtung 8 ausgerichteten Rohren der Rohrkonstruktion ausgebildet sind. Die Gleitkufen 17 und 18 sind im Wesentlichen unterhalb der Photovoltaikmodule 11, 12, 13 angeordnet, und sind in Figur 3 weitgehend von den Photovoltaikmodulen 11, 12, 13 verdeckt und nur an ihren Enden sichtbar. Mit den Gleitkufen 17 und 18 steht die Solareinheit 5 auf dem Untergrund auf. Die Gleitkufen 17, 18 können zur Ballastierung des Traggestells 15 mit einer Flüssigkeit wie beispielsweise Wasser gefüllt werden.

Zum Ziehen der Solareinheit 5 in Zugrichtung 8 ist am Traggestell 15 ein Zugmittel 19 in Form wenigstens eines Zugseils an zwei Befestigungspunkten befestigt. Insbesondere ist das Zugseil an den Kufen 17, 18 oder im Bereich der Kufen 17, 18 am Traggestell 15 befestigt.

## Patentansprüche

1. Verfahren zum Betrieb einer Photovoltaikanlage, die eine Vielzahl von Photovoltaikmodulen (11, 12, 13) aufweist, auf landwirtschaftlich genutzten Freiflächen,
**dadurch gekennzeichnet,**
**dass** eine Mehrfelderwirtschaft betrieben wird mit mehreren Solareinheiten (5, 6), die jeweils ein Traggestell (15) und mehrere auf dem Traggestell getragene Photovoltaikmodule (11, 12, 13) aufweisen und die jeweils in einer gemeinsamen Zugrichtung (8) der Solareinheiten (5, 6) über den Untergrund gezogen werden können,
bei der innerhalb eines ersten Zeitraums, insbesondere jeweils im Herbst, die Solareinheiten (5) einer jeweils vorausziehenden Gruppe von einem Feld (1, 2, 3) in ihrer Zugrichtung (8) auf ein anderes Feld (1, 2, 3) vorausgezogen werden, so dass über einen darauf folgenden zweiten Zeitraum, insbesondere über den darauf folgenden Winter, die Solareinheiten (5) dieser vorausziehenden Gruppe separat von den Solareinheiten (6) einer jeweils nachziehenden Gruppe auf dem anderen Feld (1, 2, 3) angeordnet werden, und
bei der innerhalb eines darauf folgenden dritten Zeitraums, insbesondere im darauf folgenden Frühling, nur die Solareinheiten (6) der jeweils nachziehenden Gruppe in ihrer Zugrichtung auf das andere Feld (1, 2, 3) mit den Solareinheiten (5) der jeweils vorausziehenden Gruppe nachgezogen werden, so dass über einen darauf folgenden vierten Zeitraum, insbesondere über den darauf folgenden Sommer, alle Solareinheiten (5, 6) gemeinsam in zueinander paralleler Ausrichtung und dabei jeweils benachbart zu wenigstens einer Solareinheit (5, 6) der jeweils anderen Gruppe auf dem anderen Feld (1, 2, 3) angeordnet werden.

2. Verfahren nach Anspruch 1, **dadurch gekennzeichnet, dass** die Solareinheiten (5, 6) über jeden vierten Zeitraum auf einem anderen Feld (1, 2, 3) als über den jeweils vorherigen vierten Zeitraum angeordnet werden.

3. Verfahren nach einem der vorhergehenden Ansprüche, **dadurch gekennzeichnet, dass** die Solareinheiten (6) der nachziehenden Gruppe innerhalb des dritten Zeitraums von einem zum jeweiligen Feld (1, 2, 3) unmittelbar benachbarten Feld (1, 2, 3) nachgezogen werden.

4. Verfahren nach einem der vorhergehenden Ansprüche, **dadurch gekennzeichnet, dass** die Mehrfelderwirtschaft eine Dreifelderwirtschaft ist, bei der drei Felder (1, 2, 3) in Reihe nebeneinander angeordnet sind und bei der die Solareinheiten (5, 6) wiederholt jeweils innerhalb des ersten Zeitraums oder dritten Zeitraums vom ersten Feld (1) auf das mittlere Feld (2), dann weiter auf das letzte Feld (3), dann zurück auf das mittlere Feld (2) und dann weiter zurück auf das erste Feld (1) gezogen werden.

5. Verfahren nach einem der vorherigen Ansprüche, **dadurch gekennzeichnet, dass** die Solareinheiten (5, 6) jeweils, insbesondere nacheinander, von einem Schlepper oder mittels einer Seilwinde in ihrer Zugrichtung (8) auf das jeweils andere Feld (1, 2, 3) gezogen werden.

6. Verfahren nach einem der vorherigen Ansprüche, **dadurch gekennzeichnet, dass** zumindest Teile einer Rohrkonstruktion der Traggestelle (15), nachdem die jeweilige Solareinheit (5, 6) auf das jeweils andere Feld (1, 2, 3) gezogen wurde, zur Ballastierung der Solareinheit (5, 6) mit einer Flüssigkeit, insbesondere mit Wasser oder mit einem Kältemittel oder mit einer Frostschutzflüssigkeit, befüllt werden.

7. Verfahren nach einem der vorherigen Ansprüche, **dadurch gekennzeichnet, dass** die gezogenen Solareinheiten (5, 6) auf eigenen Gleitkufen (17, 18) der Traggestelle (15), die in Zugrichtung (8) der Solareinheiten (5, 6) ausgerichtet sind, über die Felder (1, 2, 3) gleiten.

8. Verfahren nach den Ansprüchen 6 und 7, **dadurch gekennzeichnet, dass** die Gleitkufen (17, 18) Rohre der Rohrkonstruktion sind, die, nachdem die jeweilige Solareinheit (5, 6) auf das jeweils andere Feld (1, 2, 3) gezogen wurde, zur Ballastierung der Solareinheit (5, 6) mit der Flüssigkeit befüllt werden.

9. Verfahren nach einem der vorherigen Ansprüche, **dadurch gekennzeichnet, dass**, bevor die Solareinheiten (5) der vorausziehenden Gruppe auf das andere Feld (1, 2, 3) gezogen werden, dieses andere Feld (1, 2, 3) abgeerntet wird und entweder Gras (Gr) oder eine Untersaat in das andere Feld (1, 2, 3) eingesät wird oder eine Zwischenfrucht auf dem anderen Feld (1, 2, 3) angebaut wird oder das andere Feld (1, 2, 3) landwirtschaftlich brach liegen gelassen wird.

10. Verfahren nach einem der vorherigen Ansprüche, **dadurch gekennzeichnet, dass**, nachdem die Solareinheiten (6) der nachziehenden Gruppe innerhalb des dritten Zeitraums vom jeweiligen Feld (1, 2, 3) auf das jeweilige andere Feld (1, 2, 3) mit den Solareinheiten (5) der vorausziehenden Gruppe gezogen wurden, Nutzpflanzen, bevorzugt ein Sommergetreide, besonders bevorzugt Sommergerste (Sg) oder Mais, auf dem von den Solareinheiten (6) der nachziehenden Gruppe verlassenen Feld (1, 2, 3) angebaut werden.

11. Verfahren nach einem der vorherigen Ansprüche, **dadurch gekennzeichnet, dass** die Solareinheiten (5, 6) mit ihrer Zugrichtung (8) in etwa in Ostwestrichtung ausgerichtet mit den Photovoltaikmodulen (11, 12, 13) quer zu ihrer Zugrichtung (8) in etwa nach Süden geneigt auf den Feldern (1, 2, 3) angeordnet werden.

12. Photovoltaikanlage, die eine Vielzahl von Photovoltaikmodulen (11, 12, 13) aufweist und auf landwirtschaftlich genutzten Freiflächen, insbesondere mit einem Verfahren nach einem der vorherigen Ansprüche, betrieben wird, wobei die Photovoltaikanlage mehrere parallel zueinander ausgerichtete Solareinheiten (5, 6), die jeweils ein Traggestell (15) und mehrere der auf dem Traggestell (15) getragenen Photovoltaikmodule (11, 12, 13) aufweisen und die jeweils in einer gemeinsamen Zugrichtung (8) der Solareinheiten (5, 6) über den Untergrund gezogen werden können, aufweist, wobei über einen Zeitraum die Solareinheiten (5) einer jeweils vorausziehenden Gruppe auf einem anderen Feld (1, 2, 3) als die Solareinheiten (6) einer jeweils nachziehenden Gruppe und quer zur Zugrichtung (8) der Solareinheiten (5, 6) derart versetzt zu den Solareinheiten (6) der nachziehenden Gruppe angeordnet sind, dass, wenn die Solareinheiten (6) der nachziehenden Gruppe in ihrer Zugrichtung auf das andere Feld (1, 2, 3) mit den Solareinheiten (5) der vorausziehenden Gruppe nachgezogen werden, alle Solareinheiten (5, 6) gemeinsam in zueinander paralleler Ausrichtung und dabei jeweils benachbart zu wenigstens einer Solareinheit (5, 6) der jeweils anderen Gruppe auf dem anderen Feld (1, 2, 3) angeordnet werden.

13. Photovoltaikanlage nach Anspruch 12, **dadurch gekennzeichnet, dass** das Traggestell (15) eine Rohrkonstruktion aufweist, die zur Ballastierung der Solareinheit (5, 6) zumindest teilweise mit einer Flüssigkeit, insbesondere mit Wasser oder mit einem Kältemittel oder mit einer Frostschutzflüssigkeit, befüllt werden kann.

14. Photovoltaikanlage nach einem der Ansprüche 12 und 13, **dadurch gekennzeichnet, dass** das Traggestell (15) eigene Gleitkufen (17, 18) aufweist, die in Zugrichtung der Solareinheit (5, 6) ausgerichtet sind und auf denen die Solareinheit (5, 6) über die Felder (1, 2, 3) gleiten kann.

15. Photovoltaikanlage nach den Ansprüchen 13 und 14, **dadurch gekennzeichnet, dass** die Gleitkufen (17, 18) Rohre der Rohrkonstruktion sind, die zur Ballastierung der Solareinheit (5, 6) zumindest teilweise mit der Flüssigkeit befüllt werden können.

16. Photovoltaikanlage nach einem der Ansprüche 12 bis 15, **dadurch gekennzeichnet, dass** die Photovoltaikmodule (11, 12, 13) quer zur Zugrichtung (8) der Solareinheit (5, 6) geneigt auf dem Traggestell (15) angeordnet sind.
